# EUROPEAN PATENT APPLICATION

(11) **EP 4 184 423 A1**
(43) Date of publication of application: **24.05.2023**
(21) Application number: 20947495.6
(22) Date of filing: 30.07.2020
(51) Int. Cl.: G06T 3/40

(54) **ELECTRONIC SYSTEM, CAMERA MODULE, AND SYSTEM ON CHIP**

(71) Applicant: Huawei Technologies Co., Ltd., Longgang Shenzhen, Guangdong 518129 (CN)
(72) Inventor: LI, Bing, Shenzhen, Guangdong 518129 (CN); SUN, Jianjie, Shenzhen, Guangdong 518129 (CN); FAN, Maobin, Shenzhen, Guangdong 518129 (CN); WANG, Hongli, Shenzhen, Guangdong 518129 (CN); MA, Pengwei, Shenzhen, Guangdong 518129 (CN)
(74) Representative: Gill Jennings & Every LLP
(86) International application number: PCT/CN2020/105738
(87) International publication number: WO 2022/021194

(57) **Abstract**

An electronic system (200), a camera module (190, or 210), a SoC (110, or 220), and an electronic device (100) are disclosed. The camera module (210) includes a first bidirectional interface (2101). The SoC (220) includes a second bidirectional interface (2201). The second bidirectional interface (2201) is coupled to the first bidirectional interface (2101), and the first bidirectional interface (2101) and the second bidirectional interface (2201) support a same bidirectional data communication interface protocol. The camera module (190, or 210) can obtain image data, and perform first image processing on the image data to obtain a first image processing result. The SoC (110, or 220) can perform second image processing on the first image processing result to obtain a second image processing result. In this way, the camera module (210) and the SoC (220) are connected to each other through the bidirectional interfaces (2101, and 2201) that support the bidirectional data communication interface protocol, to improve flexibility of an interface between the camera module (190, or 210) and the SoC (110, or 220), so that the camera module (190, or 210) flexibly processes the image data.

## Description

### TECHNICAL FIELD

This application relates to the field of electronic consumption, and more specifically, to an electronic system, a camera module, and a system on chip (system on chip, SoC).

### BACKGROUND

Currently, with development of image processing technologies, an electronic device is usually equipped with one or more camera modules (also commonly referred to as cameras). The camera module includes an optical lens and an image sensor. The image sensor may include a photosensitive unit (for example, a photodiode), an analog to digital converter (also referred to as an A/D converter), and an image signal processor (image signal processor, ISP). A working principle of the camera module is as follows: Light reflected by a shot scene passes through the optical lens to generate an optical image, and the optical image is projected onto the photosensitive unit of the image sensor; the photosensitive unit converts the optical image into an electrical signal, namely, an analog image signal; the analog image signal is converted into a digital image signal by using the analog to digital converter; the digital image signal is transmitted to the ISP; and the ISP further processes the digital image signal. An image processing result of the ISP is further transmitted to a processing device, for example, a SoC, in the electronic device, and the SoC further processes the image processing result to implement various image-based applications.

Currently, data transmission between the camera module and the SoC is mainly implemented by using a D physical layer (D physical layer, DPHY) or a C physical layer (C physical layer, CPHY) defined by a mobile industry processor interface (mobile industry processor interface, MIPI) protocol organization. Usually, during an intellectual property core (intellectual property core, IP) design, the DPHY or the CPHY may be used to support signal transmission from the camera module to the SoC, so that the SoC can receive an image processing result obtained after preliminarily processing is performed by the camera module. However, an existing interface design is not sufficiently flexible. Consequently, a manner of processing image data by the camera module is also rigid.

### SUMMARY

This application provides an electronic system, a camera module, a SoC, and an electronic device, to improve flexibility of an interface between the camera module and the SoC, and facilitate flexible processing on image data by the camera module.

According to a first aspect, an electronic system is provided, including a camera module and a system on chip SoC. The camera module includes a first bidirectional interface. The SoC includes a second bidirectional interface, the second bidirectional interface is coupled to the first bidirectional interface, and the first bidirectional interface and the second bidirectional interface support a same bidirectional data communication interface protocol. The camera module is configured to obtain image data, and perform first image processing on the image data to obtain a first image processing result. The SoC is configured to perform second image processing on the first image processing result to obtain a second image processing result.

The electronic system provided in this application is different from a solution of the conventional technology. The camera module and the SoC are coupled to each other through interfaces that support the bidirectional data communication interface protocol, so that interface implementation flexibility can be improved, and the camera module can flexibly process image data. For example, the camera module may receive image data from the SoC for processing, and flexibility is higher.

In addition, because the first bidirectional interface and the second bidirectional interface support the bidirectional data communication interface protocol, a function of a MIPI interface in the conventional technology is replaced. In this way, the camera module and the SoC do not need to use another bus interface such as a MIPI interface. In this way, a quantity of reserved pins of the camera module and the SOC can be reduced, and a packaging area can be reduced.

With reference to the first aspect, in some implementations of the first aspect, the bidirectional data communication interface protocol includes a serializer/deserializer (serializer/deserializer, SerDes) interface protocol. By using the SerDes interface protocol, high-speed bidirectional data communication can be implemented. In addition, a clock may be embedded in the SerDes interface, so that clock signals do not need to be transmitted. Therefore, clock single-sourcing of the camera module and the SoC can be implemented.

With reference to the first aspect, in some implementations of the first aspect, each of the first bidirectional interface and the second bidirectional interface includes a transmit interface and a receive interface, or includes a transceiver interface multiplexed for sending and receiving.

With reference to the first aspect, in some implementations of the first aspect, the system further includes a memory. The memory is connected to the SoC. The image data includes first image data. The camera module is further configured to: before performing the first image processing on the first image data, send the first image data to the SoC through the first bidirectional interface. The SoC is further configured to: receive the first image data through the second bidirectional interface, store the first image data into the memory, read the first image data from the memory, and send the first image data to the camera module through the second bidirectional interface. The camera module is further configured to: receive the first image data through the first bidirectional interface, and perform the first image processing on the first image data.

In some scenarios, the camera module needs to process a large amount of image data. However, because the camera module cannot process all image data in real time, more storage space is needed to buffer the image data, so that an image processor in the camera module processes the buffered image data after processing image data currently processed. To be specific, external buffering and re-reading of image data of the camera module are implemented. However, storage space in the camera module is limited, and due to factors such as costs, an area, packaging, and power consumption, a static random-access memory (static random-access memory, SRAM) with a larger capacity cannot be integrated in the camera module. However, according to the foregoing solution provided in this application, the camera module can access the memory by using the SoC through the first bidirectional interface and the second bidirectional interface, to resolve the foregoing problem and extend a use scenario of the electronic system.

With reference to the first aspect, in some implementations of the first aspect, the memory includes a double data rate (double data rate, DDR) random-access memory (random-access memory, RAM).

With reference to the first aspect, in some implementations of the first aspect, the image data includes second image data; and the camera module is configured to perform the first image processing on the second image data when there is no need to send the second image data through the first bidirectional interface. Therefore, in addition to external buffering and re-reading modes of image data, the camera module further has a direct processing mode, enriching an application scheme.

With reference to the first aspect, in some implementations of the first aspect, the system further includes a memory. The memory is connected to the SoC. The SoC is further configured to: store the first image processing result corresponding to the second image data into the memory, read the first image processing result corresponding to the second image data from the memory, and send the first image processing result corresponding to the second image data to the camera module through the second bidirectional interface. The camera module is further configured to: receive, through the first bidirectional interface, the first image processing result corresponding to the second image data, and perform third image processing on the first image processing result corresponding to the second image data. It should be understood that, the first image processing result corresponding to the second image data is an image processing result obtained after the first image processing is performed on the second image data. According to the foregoing solution provided in this application, the camera module can access the memory by using the SoC through the first bidirectional interface and the second bidirectional interface, extending a use scenario of the electronic system.

It should be understood that the third image processing and the first image processing may be the same or different. This is not limited in this application. For example, the third image processing may be at least one of noise reduction, calibration, and defect (defect) point detection. This application does not specifically limit a specific operation for the third image processing, and any suitable operation may belong to the third image processing.

With reference to the first aspect, in some implementations of the first aspect, a storage controller is configured to: store the first image data into the memory and read the first image data from the memory; or store the first image processing result corresponding to the second image data into the memory, and read the first image processing result corresponding to the second image data from the memory.

According to a second aspect, a camera module is provided, including: a first image processing device, configured to obtain image data, and perform first image processing on the image data to obtain a first image processing result; and a first bidirectional interface, coupled to a second bidirectional interface of a system on chip SoC, where the first bidirectional interface and the second bidirectional interface support a same bidirectional data communication interface protocol, and the first bidirectional interface is configured to send the first image processing result to the SoC.

For example, the first image processing device may be an image sensor. The image sensor may include a photosensitive unit (for example, a photodiode), an A/D converter, and an ISP. An optical signal passing through an optical lens in the camera module may be projected onto the photosensitive unit of the image sensor, the photosensitive unit converts the optical signal into an electrical signal, namely, an analog image signal, the analog image signal is converted into image data (namely, a digital image signal) after being converted by the analog to digital converter, and the ISP may perform the first image processing on the image data to obtain the first image processing result.

The camera module provided in this application is connected to the SoC through bidirectional interfaces that support the bidirectional data communication interface protocol, so that bidirectional data communication with the SoC can be implemented, and interface flexibility is improved, so that image data can be processed more flexibly.

With reference to the second aspect, in some implementations of the second aspect, the bidirectional data communication interface protocol includes a serializer/deserializer SerDes interface protocol.

With reference to the second aspect, in some implementations of the second aspect, the first bidirectional interface includes a transmit interface and a receive interface, or includes a transceiver interface multiplexed for sending and receiving.

With reference to the second aspect, in some implementations of the second aspect, the image data includes first image data. The first bidirectional interface is further configured to: send the first image data to the SoC, where the first image data is further stored by the SoC into a memory connected to the SoC; and receive, from the SoC, the first image data stored in the memory; and the first image processing device is configured to perform the first image processing on the first image data.

With reference to the second aspect, in some implementations of the second aspect, the memory includes a double rate random-access memory DDR RAM.

With reference to the second aspect, in some implementations of the second aspect, the image data includes second image data. The first image processing device is further configured to perform the first image processing on the second image data when there is no need to send the second image data through the first bidirectional interface.

With reference to the second aspect, in some implementations of the second aspect, the first image processing result corresponding to the second image data is further stored by the SoC into the memory connected to the SoC; the first image processing result corresponding to the second image data stored in the memory is received from the SoC; and the first image processing device is further configured to perform third image processing on the first image processing result corresponding to the second image data.

According to a third aspect, a system on chip SoC is provided, including: a second bidirectional interface, coupled to a first bidirectional interface of a camera module, where the first bidirectional interface and the second bidirectional interface support a same bidirectional data communication interface protocol, the second bidirectional interface is configured to obtain a first image processing result from the camera module, and the first image processing result is obtained by the camera module by performing first image processing on image data; and a second image processing device, configured to perform second image processing on the first image processing result to obtain a second image processing result.

For example, the second image processing device may be an ISP, a central processing unit (central processing unit, CPU), or another image processing unit, and may perform at least one subsequent processing, such as 3A processing, image domain conversion, or image post-processing, on the first image data result.

With reference to the third aspect, in some implementations of the third aspect, the bidirectional data communication interface protocol includes a serializer/deserializer SerDes interface protocol.

With reference to the third aspect, in some implementations of the third aspect, the second bidirectional interface includes a transmit interface and a receive interface, or includes a transceiver interface multiplexed for sending and receiving.

With reference to the third aspect, in some implementations of the third aspect, the SoC is connected to a memory, the image data includes first image data, and the second bidirectional interface is further configured to obtain the first image data from the camera module. The SoC further includes a storage controller, configured to store the first image data into the memory, and read the first image data from the memory. The second bidirectional interface is further configured to send the first image data to the camera module, where the camera module performs the first image processing on the first image data.

With reference to the third aspect, in some implementations of the third aspect, the SoC is connected to a memory. The SoC further includes a storage controller, configured to store the first image processing result into the memory, and read the first image processing result from the memory. The second bidirectional interface is further configured to send the first image processing result to the camera module, where the camera module performs third image processing on the first image processing result.

With reference to the third aspect, in some implementations of the third aspect, the memory includes a double rate random-access memory DDR RAM.

According to a fourth aspect, an electronic device is provided, including the electronic system in the first aspect or any possible implementation of the first aspect. Optionally, the electronic device is a portable electronic device, for example, a mobile phone.

According to a fifth aspect, an image processing method is provided, including: A camera module obtains first image data, and sends the first image data to a SoC; the SoC receives the first image data, and stores the first image data into a memory; the SoC reads the first image data from the memory, and sends the first image data to the camera module; and the camera module receives the first image data, and performs first image processing on the first image data to obtain a first image processing result.

Optionally, the camera module sends the first image processing result to the SoC, and the SoC performs second image processing on the first image processing result to obtain a second image processing result.

Optionally, the camera module includes a first bidirectional interface; and the SoC includes a second bidirectional interface. The second bidirectional interface is coupled to the first bidirectional interface, and the first bidirectional interface and the second bidirectional interface support a same bidirectional data communication interface protocol.

Optionally, the bidirectional data communication interface protocol includes a SerDes interface protocol.

Optionally, each of the first bidirectional interface and the second bidirectional interface includes a transmit interface and a receive interface, or includes a transceiver interface multiplexed for sending and receiving.

Optionally, the memory includes a DDR RAM.

In some scenarios, the camera module needs to process a large amount of image data. However, because the camera module cannot process all image data in real time, more storage space is needed to buffer the image data, so that an image processor in the camera module processes the buffered image data after processing image data currently processed. To be specific, external buffering and re-reading of image data of the camera module are implemented. However, storage space in the camera module is limited, and due to factors such as costs, an area, packaging, and power consumption, a static random-access memory (static random-access memory, SRAM) with a larger capacity cannot be integrated in the camera module. However, according to the image processing method provided in this application, the camera module can access the memory by using the SoC, thereby resolving the foregoing problem.

According to a sixth aspect, an image processing method is provided, including: A camera module obtains second image data, and performs first image processing on the second image data, to obtain a first image processing result; the camera module sends the first image processing result to a SoC; the SoC receives the first image processing result, and stores the first image processing result into a memory; the SoC reads the first image processing result from the memory, and sends the first image processing result to the camera module; and the camera module receives the first image processing result, and performs third image processing on the first image processing result to obtain a third image processing result.

Optionally, the method further includes: The camera module sends the third image processing result to the SoC; and the SoC performs second image processing on the third image processing result to obtain a fourth image processing result.

Optionally, the camera module includes a first bidirectional interface; and the SoC includes a second bidirectional interface. The second bidirectional interface is coupled to the first bidirectional interface, and the first bidirectional interface and the second bidirectional interface support a same bidirectional data communication interface protocol.

Optionally, the bidirectional data communication interface protocol includes a SerDes interface protocol.

Optionally, each of the first bidirectional interface and the second bidirectional interface includes a transmit interface and a receive interface, or includes a transceiver interface multiplexed for sending and receiving.

Optionally, the memory includes a DDR RAM.

In some scenarios, the camera module needs to process a large amount of image data. However, because the camera module cannot process all image data in real time, more storage space is needed to buffer the image data, so that an image processor in the camera module processes the buffered image data after processing image data currently processed. To be specific, external buffering and re-reading of image data of the camera module are implemented. However, storage space in the camera module is limited, and due to factors such as costs, an area, packaging, and power consumption, a static random-access memory (static random-access memory, SRAM) with a larger capacity cannot be integrated in the camera module. However, according to the image processing method provided in this application, the camera module can access the memory by using the SoC, thereby resolving the foregoing problem.

According to a seventh aspect, an electronic system is provided, including a camera module and a system on chip SoC, and the electronic system is configured to perform the method in the fifth aspect or the sixth aspect.

According to an eighth aspect, a camera module is provided, corresponding to the camera module in the electronic system in the seventh aspect.

According to a ninth aspect, a SoC is provided, corresponding to the SoC in the electronic system in the seventh aspect.

### BRIEF DESCRIPTION OF DRAWINGS

FIG. 1 is a schematic diagram of a structure of an electronic device according to this application;
FIG. 2 is a schematic diagram of an electronic system according to this application;
FIG. 3 is a schematic diagram of a definition of pins of a SerDes interface;
FIG. 4 is a schematic diagram of a structure of a camera module according to this application;
FIG. 5 is a schematic diagram of a structure of a SoC according to this application;
FIG. 6 is a schematic flowchart of an image processing method according to this application; and
FIG. 7 is a schematic flowchart of another image processing method according to this application.

### DESCRIPTION OF EMBODIMENTS

The following describes technical solutions of this application with reference to the accompanying drawings. The technical solutions provided in this application may be applied to an electronic device, for example, a mobile phone, a digital camera, a video camera, a tablet computer, a media player, a game console, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA), on which a camera module including one or more cameras is configured.

This application provides a solution. The camera module and a SoC in the electronic device are coupled to each other through bidirectional interfaces that support a bidirectional data communication interface protocol, so that interface flexibility can be improved, and the camera module can flexibly process image data. For example, the camera module may receive image data from the SoC for processing, and does not merely transmit image data to the SoC unidirectionally, and flexibility is higher. The solution provided in this application is described below. It may be understood that the bidirectional interface is an interface that can perform data sending and data receiving, and is not only used for unidirectional data transmission. For example, the bidirectional interface is a SerDes interface. The bidirectional interface is different from another interface that can only transmit control information to the camera module, and the SoC can also transmit data to the camera module through the bidirectional interface. The data may include image data from an image sensor in the camera module, a processing result obtained after the image data is processed, or the like. This is described in detail later.

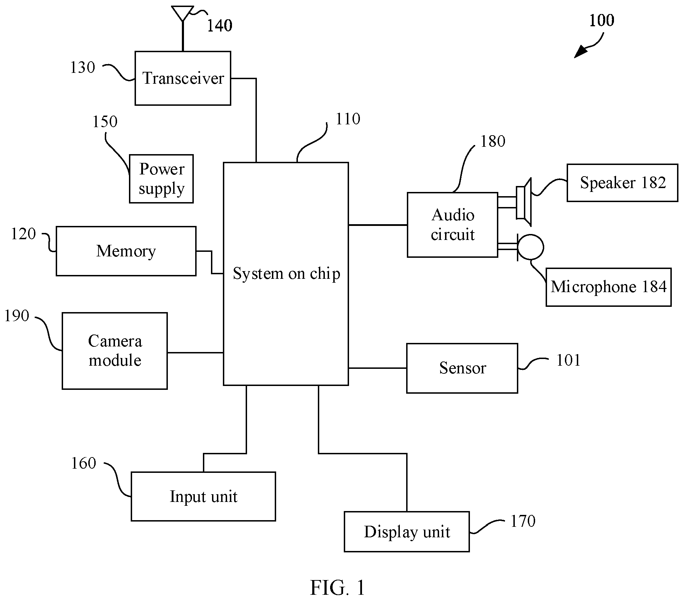

For ease of understanding this application, the electronic device shown in FIG. 1 is first used as an example to briefly describe a possible structure of the electronic device. FIG. 1 is a schematic diagram of a structure of an electronic device. The electronic device 100 may include a SoC 110 and one or more camera modules 190. The SoC 110 is a chip that includes a logical operation circuit, and may optionally further include an analog circuit, a storage circuit, any type of interface, or the like.

The SoC 110 may include one or more processing units. For example, the SoC 110 may include one or more of the following units: a central processing unit (central processing unit, CPU), a neural network process unit (NPU), an application processor (application processor, AP), a modem processor, a graphics processing unit (graphics processing unit, GPU), an ISP, a controller, a video codec, a digital signal processor (digital signal processor, DSP), and a baseband processor. Different processing units may be independent devices, or may be integrated into one or more processors.

The camera module 190 may be configured to shoot an external video or picture, and may be configured to shoot scenes at different distances. For example, the camera module may be configured to shoot a distant scene, may be configured to shoot a near scene, or may be configured to shoot a macro scene. The camera module 110 may also be configured to take a selfie. This is not limited in this embodiment of this application.

The camera module 190 may include an optical lens and an image sensor. The image sensor may include a photosensitive unit (for example, a photodiode), an A/D converter, and an ISP. The optical lens is an apparatus capable of receiving optical signals and converging the optical signals to the photosensitive unit of the image sensor. The image sensor is configured to obtain image data, and may perform first image processing on the image data. Specifically, the photosensitive unit may convert an optical signal passing through the optical lens into an electrical signal, namely, an analog image signal, and the analog image signal becomes image data (namely, a digital image signal) after being converted by the analog to digital converter, and the ISP may perform further processing on the image data. A processing result obtained after processing is performed by the ISP may be transmitted to the SoC 110, and the SoC 110 performs further processing.

Optionally, the electronic device 100 may further include a display unit 170. The display unit 170 is configured to display an image, a video, and the like. The display unit 170 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED (MiniLED), a micro-LED (MicroLED), a micro-OLED (Micro-OLED), a quantum dot light emitting diode (quantum dot light emitting diode, QLED), or the like. In some embodiments, the electronic device 100 may include one or more display units 170. For example, the SoC 110 may further process the processing result output by the ISP in the camera module 190, and an obtained result may be provided to the display unit 170, and the display unit 170 displays a corresponding image.

Optionally, the electronic device 100 further includes a memory 120. The internal memory 120 may be configured to store computer-executable program code. The executable program code includes instructions. The SoC 110 runs the instructions stored in the memory 120, to perform various functional applications and data processing of the electronic device 100. The memory 120 may include a program storage area and a data storage area. The program storage area may store an operating system, an application required by at least one function (for example, a sound playing function or an image playing function), and the like. The data storage area may store data (such as audio data and an address book) and the like that are created during use of the electronic device 100. In addition, the memory 120 may include a high-speed random access memory, and may further include a nonvolatile memory, for example, at least one magnetic disk storage device, a flash memory, or a universal flash storage (universal flash storage, UFS).

In some possible embodiments, a memory may be disposed in the SoC 110. For example, the memory in the SoC 110 is a cache memory. The memory may store an instruction or data that the SoC 110 has just used or recycled. If the SoC 110 needs to use the instruction or data again, the instruction or data may be directly invoked from the memory. Repeated access is avoided, and waiting time of the SoC 110 is reduced. Therefore, efficiency of the system is improved. Certainly, the memory may also exist independently of the SoC 110, for example, a memory 120 shown in the figure. This is not limited in this application.

Optionally, the electronic device 100 further includes a transceiver 130. In addition, to improve functions of the electronic device 100, the electronic device 100 may further include one or more of an antenna 140, an input unit 160, an audio circuit 180, a sensor 101 (for example, an acceleration sensor or a gravity sensor), and the like. The audio circuit may also be coupled to a speaker 182, a microphone 184, and the like. Optionally, the electronic device 100 may further include a power supply 150, configured to provide power supply to various devices or circuits in the terminal device. It should be understood that FIG. 1 is merely for ease of understanding, and shows, by using examples, modules or units in the electronic device and a connection relationship between the modules or units. However, this should not constitute any limitation on this application. Modules and units specifically included in the electronic device and a connection relationship between every two of the modules and the units are not limited in this application.

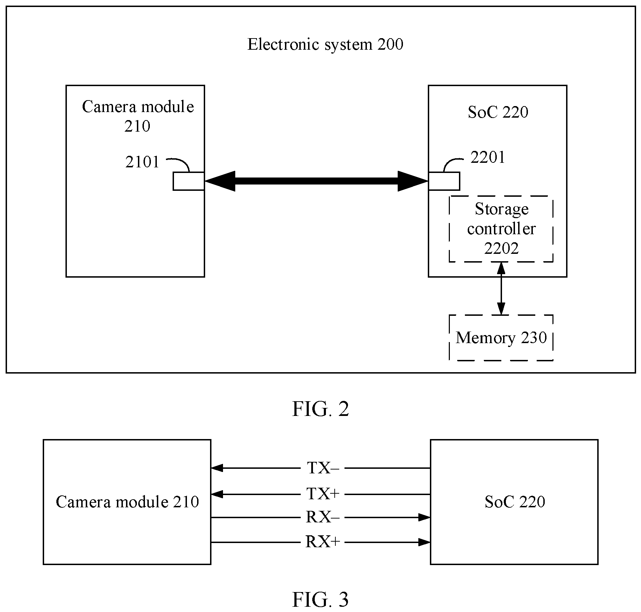

It should be further understood that the electronic device 100 shown in FIG. 1 may include an electronic system 200 shown in FIG. 2. To be specific, the camera module 190 in the electronic device 100 shown in FIG. 1 may be a camera module 210 in the electronic system 200 shown in FIG. 2, and the SoC 110 in the electronic device 100 shown in FIG. 1 may be a SoC 220 in the electronic system 200 shown in FIG. 2.

FIG. 2 is a schematic diagram of an electronic system according to this application. With reference to FIG. 2, the electronic system 200 includes a camera module 210 and a SoC 220. The camera module 210 includes a first bidirectional interface 2101, the SoC 220 includes a second bidirectional interface 2201, the second bidirectional interface 2201 is coupled to the first bidirectional interface 2101, and the first bidirectional interface 2101 and the second bidirectional interface 2201 support a same bidirectional data communication interface protocol.

The camera module 210 is configured to obtain image data. For example, the SoC 220 may send a video shooting or picture shooting request to the camera module 210 through the second bidirectional interface 2201, and when receiving the request through the first bidirectional interface 2101, the camera module 210 may obtain image data. Specifically, the camera module 210 may include an optical lens and an image sensor. The image sensor may include a photosensitive unit (for example, a photodiode), an A/D converter, and an ISP. Specifically, the photosensitive unit may convert an optical signal passing through the optical lens into an electrical signal, namely, an analog image signal, and the analog image signal becomes image data (namely, a digital image signal) after being converted by the A/D converter.

In Manner 1, the image data of the camera module 210 may be buffered, to facilitate subsequent processing. For example, after obtaining the image data by using the A/D converter, the ISP in the camera module 210 may not immediately perform first image processing on a part or all of the obtained image data, for example, the image data that is not immediately processed may be a part of all the image data obtained by the camera module 210, and correspond to first image data in the following. The camera module 210 directly sends the obtained first image data to the second bidirectional interface 2201 through the first bidirectional interface 2101, so that the SoC 110 receives the first image data through the second bidirectional interface 2201 and buffers the first image data. For a specific method, refer to the description of the subsequent embodiments.

Different from Manner 1, in another manner: Manner 2, the camera module 210 directly processes image data without buffering the image data. For example, after obtaining the image data by using the A/D converter, the ISP in the camera module 210 may directly or immediately perform the first image processing on the obtained image data, for example, perform the first image processing on second image data in all the obtained image data, to obtain a first image processing result. To be specific, the ISP performs the first image processing on the second image data to obtain the first image processing result when there is no need to send the second image data through the first bidirectional interface.

In the foregoing solution, the first image processing may be, for example, at least one of noise reduction, calibration, and defect (defect) point detection. This application does not specifically limit a specific operation for the first image processing, and any suitable operation may belong to the first image processing. The first image processing result may be sent to the second bidirectional interface 2201 through the first bidirectional interface 2101.

In conclusion, according to the electronic system provided in this application, the camera module and the SoC are connected to each other through the bidirectional interfaces that support the bidirectional data communication interface protocol, to improve interface flexibility, so that data information can be bidirectionally transmitted between the camera module and the SoC, and the camera module processes image data more flexibly.

In addition, because the first bidirectional interface and the second bidirectional interface support the bidirectional data communication interface protocol, the first bidirectional interface and the second bidirectional interface can replace a function of a MIPI bus interface in the conventional technology. In this way, the camera module and the SoC do not need to use another bus interface such as a MIPI interface. In this way, a quantity of reserved pins of the camera module and the SOC can be reduced, and a packaging area can be reduced.

Optionally, in a manner, after receiving the first image processing result or the first image data through the second bidirectional interface 2201, the SoC 220 may perform second image processing on the first image processing result or the first image data, to obtain a corresponding second image processing result. For example, the SoC 220 may perform at least one processing, such as 3A processing or data domain conversion, on the received image data, to obtain a corresponding image processing result. The 3A processing includes auto focusing (AF), auto exposure (AE), and auto white balance (AWB). Further, the SoC 220 may present the second image processing result to a user by using a display. For example, the SoC 220 may transmit the second image processing result to a display unit similar to the display unit 170 shown in FIG. 1, and the display unit displays the second image processing result.

In some scenarios, the camera module 210 needs to process a large amount of image data. However, because the camera module 210 cannot process all image data in real time, more storage space is needed to buffer the image data, so that the ISP in the camera module 210 processes other buffered image data after processing the image data currently processed. For example, the ISP in the camera module 210 may also integrate an image algorithm and an AI algorithm, and the camera module 210 needs to buffer a plurality of frames of image data when processing image data. In another example, functions such as face recognition, mobile phone unlocking, environment recognition, and monitoring require the always on (Always on) camera module 210 that is online in real time with lower power consumption, and if all image post-processing is completed by the SoC 220, power consumption is high. It is more suitable for the camera module 210 to perform at least one part of the image post-processing, and approximately tens of MBs of storage space is needed to buffer image data when the camera module 210 completes image post-processing. In another example, the electronic device 200 stores personal privacy and asset information. To prevent hackers from stealing internal data of the SoC 220 through the interface of the camera module 210, data encryption of the camera module 210 has become increasingly urgent. Integrating the encryption algorithm into the camera module 210 for implementation also needs at least tens of MBs of storage space for data buffering. In another example, there are many camera manufacturers and models in the market, and there are large differences in image data encoding and formats. Integrating a raw data (Raw data) domain image format classification algorithm into the camera module 210 needs approximately tens of MBs of storage space for data buffering. In another example, to reduce a burden of the SoC 220, considering some scenarios of low-pixel photographing, data processing of some raw data, and the like are completed in the camera module 210. In this case, hundreds of MBs of storage space are needed for data buffering. In another example, a plurality of cameras in the camera module 210 also need some storage space to synchronize data to respective cameras by using a high-speed bus, to implement more efficient auto image stability (auto image stabilization, AIS), and the like.

It can be learned from the examples of the foregoing application scenarios that large storage space is needed when the camera module 210 processes image data. However, storage space in the camera module 210 is limited, and due to factors such as costs, an area, packaging, and power consumption, a SRAM with a larger capacity cannot be integrated in the camera module 210. A solution provided in this application can resolve the foregoing problem. In an optional implementation, as shown in FIG. 2, the system 200 may further include a memory 230, and the memory 230 is connected to the SoC 220. Optionally, the memory 230 is configured to support the solution of buffering image data of the camera module 210, as mentioned in the foregoing Manner 1.

In an example corresponding to the foregoing Manner 1, after the camera module 210 sends the first image data to the SoC 220 through the first bidirectional interface 2101, correspondingly, after receiving the first image data through the second bidirectional interface, the SoC 220 may store the first image data into the memory 230. After buffering for a period of time, the SoC 220 may also re-read the first image data from the memory 230, and send the first image data to the camera module 210 through the second bidirectional interface 2201. Correspondingly, the camera module 210 may receive the first image data through the first bidirectional interface 2101, and start to perform the first image processing on the received first image data.

Specifically, after receiving the first image data through the second bidirectional interface 2201, the SoC 220 may store the first image data into the memory 230, to implement buffering of the image data. When the camera module 210 needs to use the first image data, the buffered data may be retransmitted to the camera module 210. To be specific, a storage path of the first image data is: the first bidirectional interface 2101 to the second bidirectional interface 2201 to the memory 230. A reading path of the first image data is: the memory 230 to the second bidirectional interface 2201 to the first bidirectional interface 2101.

In an example corresponding to the foregoing Manner 2, after the camera module 210 sends the first image processing result to the SoC 220 through the first bidirectional interface 2101, correspondingly, after receiving the first image processing result through the second bidirectional interface 2201, the SoC 220 may store the first image processing result into the memory 230. After buffering for a period of time, the SoC 220 may also re-read the first image processing result from the memory 230, and send the first image processing result to the camera module 210 through the second bidirectional interface 2201. Correspondingly, the camera module 210 may receive the first image processing result through the first bidirectional interface 2101, and start to perform third image processing on the received first image processing result. Specifically, after receiving the first image processing result through the second bidirectional interface 2201, the SoC 220 may store the first image processing result into the memory 230, to implement buffering of the image data. When the camera module 210 needs to use the first image processing result, buffered data may be retransmitted to the camera module 210. It may be understood that a storage path and a reading path of the first image processing result are the same as those of the first image data.

Effects and functions of the third image processing and the first image processing may be the same or different. This is not limited in this application. For example, the third image processing may be at least one of noise reduction, calibration, and defect (defect) point detection. This application does not specifically limit a specific operation for the third image processing, and any suitable operation may belong to the third image processing.

It should be understood that, a result obtained after the first image processing is performed on the first image data (that is, the first image processing result) or a result obtained after the third image processing is performed on the first image processing result (that is, the third image processing result) may be further sent to the SoC 220 through the first bidirectional interface 2101. After receiving the first image processing result through the second bidirectional interface 2201, the SoC 220 may perform second image processing on the first image processing result to obtain a second image processing result. Alternatively, after receiving the third image processing result through the second bidirectional interface 2201, the SoC 220 may perform the second image processing on the third image processing result, to obtain a fourth image processing result. Further, the SoC 220 may present the second image processing result or the fourth image processing result to a user by using a display. For example, the SoC 220 may transmit the second image processing result or the fourth image processing result to a display unit similar to the display unit 170 shown in FIG. 1, and the display unit displays the second image processing result or the fourth image processing result.

Therefore, based on the foregoing solution, expressions such as "first", "first", "third", and "fourth" are not used to constitute a limitation on specific solutions of embodiments. Various data, regardless of raw image data or an image processing result obtained after processing is performed by any ISP or another processing unit, may be transmitted between the camera module 210 and the SoC 220 through bidirectional interfaces, so that any processing unit in the camera module 210 and the SoC 220 performs further image processing flexibly. In addition, the processing result can be flexibly further transmitted between the camera module 210 and the SoC 220 through the bidirectional interfaces, to improve solution implementation flexibility and processing performance.

Based on the foregoing solution, the camera module 210 can access the memory 230 through the first bidirectional interface and the second bidirectional interface. This access uses the SoC 220 as a relay, to resolve the foregoing problem and extend a use scenario of the electronic system.

Further, as shown in FIG. 2, to buffer the foregoing image data, the SoC 220 may further include a storage controller 2202, configured to: store the first image data (or the first image processing result) into the memory 230, and read the first image data (or the first image processing result) from the memory 230. To be specific, a data relay function between the camera module 210 and the memory 230 may be implemented by using the storage controller 2202 in the SoC 220. Because the camera module 210 does not have a related capability of the storage controller 2202, data transfer and buffering are indirectly implemented by using the storage controller 2202 in the SoC 220, to achieve the foregoing data transmission function. To be specific, the storage path of the first image data (or the first image processing result) is: the first bidirectional interface 2101 to the second bidirectional interface 2201 to the storage controller 2202 to the memory 230. The reading path of the first image data (or the first image processing result) is: the memory 230 to the storage controller 2202 to the second bidirectional interface 2201 to the first bidirectional interface 2101.

Optionally, the memory may be a DDR RAM, or may be another type of memory. This is not limited in this application.

Optionally, the first bidirectional interface may include a transmit interface and a receive interface, or include a transceiver interface multiplexed for sending and receiving. In other words, the first bidirectional interface may include two interfaces, where one interface is used for sending and the other interface is used for receiving. Alternatively, the first bidirectional interface may be implemented by a transceiver interface, and the transceiver interface may implement sending and receiving functions in a time division manner. Optionally, the second bidirectional interface may also include a transmit interface and a receive interface, or include a transceiver interface multiplexed for sending and receiving.

Optionally, the bidirectional data communication interface protocol may be a SerDes interface protocol. It should be understood that, the SerDes interface protocol is a high-speed bidirectional interface protocol. For details of the SerDes interface protocol, refer to the existing technology. Details are not described herein again.

For example, FIG. 3 is a schematic diagram of a definition of pins of a SerDes interface. With reference to FIG. 3, pins of the SerDes interface include two pairs of differential signal lines, where one pair of differential signal lines is transmit differential signal lines (TX-, TX+), and the other pair of differential signal lines is a receive differential signal line pair (RX-, RX+). Bidirectional duplex point-to-point data transmission can be implemented by using the two pairs of differential signal lines.

A MIPI interface used in the conventional technology has a large quantity of pins. For example, a 3-lane (lane) CPHY needs 9 pins, and complexity is high. However, the SerDes interface protocol provided in this application needs only four pins to implement high-speed bidirectional transmission. Therefore, by coupling the camera module to the SoC through the SerDes interface, a quantity of reserved pins of the camera module and the SOC can be reduced, and a packaging area can be reduced.

In addition, a clock may be embedded in the SerDes interface, so that clock single-sourcing of the camera module and the SoC can be implemented when clock signals do not need to be transmitted from a clock circuit inside the SoC to the first bidirectional interface 2101 and the second bidirectional interface 2201.

Optionally, when there is no data transmission between the camera module 210 and the SoC 220, the first bidirectional interface 2101 and the second bidirectional interface 2201 may enter a low power consumption mode. Correspondingly, the camera module 210 and the SoC 220 also enter the low power consumption mode. In this way, when there is no data transmission between the camera module 210 and the SoC 220, the first bidirectional interface and the second bidirectional interface enter the low power consumption mode, so that power consumption of the camera module 210 and the SoC 220 can be reduced.

It should be noted that, the electronic system 100 may further include one or more camera modules in addition to the camera module 210. Each camera module may include a bidirectional interface supporting the bidirectional data communication interface protocol. For each camera module, the SoC includes a bidirectional interface corresponding to the camera module. In this way, each camera module and the SoC may be coupled to each other through a corresponding pair of bidirectional interfaces, so that point-to-point bidirectional data communication can be implemented.

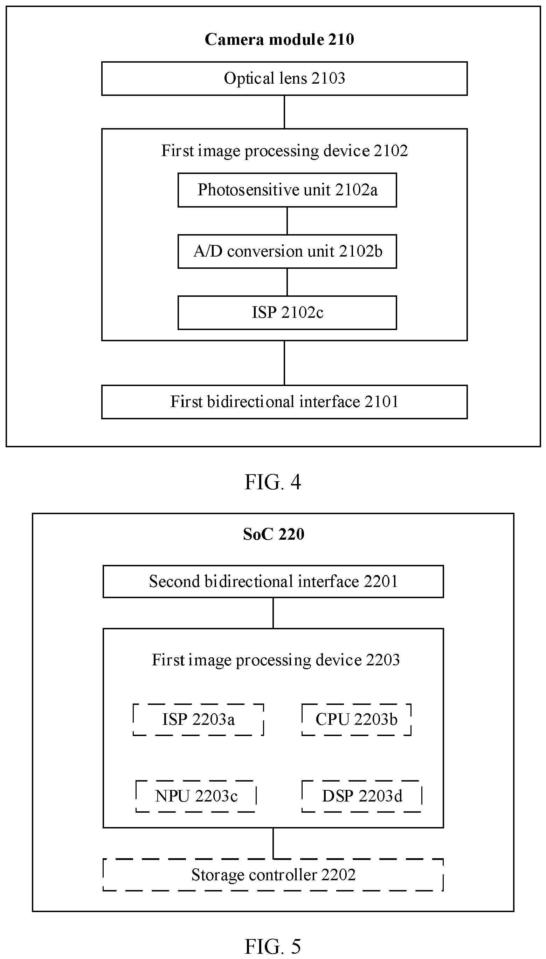

The following describes the camera module 210 and the SoC 220 in detail with reference to FIG. 4 to FIG. 6. FIG. 4 is a schematic diagram of a structure of the camera module 210. With reference to FIG. 4, the camera module 210 includes a first image processing device 2102 and the first bidirectional interface 2101. The first bidirectional interface 2101 is coupled to the second bidirectional interface of the system on chip SoC 220, and the first bidirectional interface and the second bidirectional interface support the same bidirectional data communication interface protocol.

The camera module 210 may further include an optical lens 2103. The optical lens 2103 affects imaging quality and imaging effects, and performs imaging mainly by using a refraction principle of a lens. To be specific, scene light passes through the lens to form a clear image on a focusing plane, and the scene image is recorded by using a photosensitive material or a photoreceptor. The lens may be an entirety formed through system combination of different lenses (lenses) and a composition of the lens may be a lens structure. For example, the lens is formed by several lenses, and the lens may be a plastic (plastic) lens or a glass (glass) lens, and may be a spherical or non-spherical lens. The lens may be a fixed focal length lens, or a zoom lens, or may be a standard lens, a short-focus lens, or a long-focus lens.

The first image processing device 2102 may be an image sensor. The image sensor may include a photosensitive unit (for example, a photodiode) 2102a, an A/D converter 2102b, and an ISP 2102c. Specifically, the photosensitive unit 2102a may convert an optical signal passing through the optical lens 2103 into an electrical signal, namely, an analog image signal, and the analog image signal becomes image data (namely, a digital image signal) after being converted by the A/D converter 2102b. The ISP 2102c may perform further processing on the image data, to obtain a corresponding processing result.

The image sensor is a semiconductor chip including hundreds of thousands to millions of photodiodes on its surface. When illuminated by light, the image sensor generates charges and converts the charges into digital signals by using a chip of the analog to digital converter. The image sensor may be a charge coupled device (charge coupled device, CCD) or a complementary metal-oxide conductor (complementary metal-oxide semiconductor, CMOS). The charge coupled device image sensor CCD is made of a semiconductor material with a high photosensibility, and can convert light into charges, which are converted into digital signals by using an A/D converter therein. The complementary metal-oxide semiconductor CMOS is a semiconductor mainly made of two elements: silicon and germanium, so that semiconductors with N (with -electricity) and P (with +electricity) poles coexist on the CMOS. Current generated by these two complementary effects can be recorded and interpreted as images by a processing chip.

It should be understood that, for details of functions of the first image processing device 2102 and the first bidirectional interface 2101 and operations performed by the first image processing device 2102 and the first bidirectional interface 2101, refer to the foregoing description of the system 200. Details are not described herein again.

It should be further understood that, the camera module 210 may further other components in addition to the first image processing device 2102 and the first bidirectional interface 2101, for example, at least one of a power supply module, a random access memory (random access memory, RAM), and a read-only memory (read-only memory, ROM).

FIG. 5 is a schematic diagram of a structure of the SoC 220. With reference to FIG. 5, the SoC 220 includes the second bidirectional interface 2201 and a second image processing device 2203. The second bidirectional interface 2201 is coupled to the first bidirectional interface 2201 of the camera module 220, and the first bidirectional interface 2201 and the second bidirectional interface 2202 support the same bidirectional data communication interface protocol.

The second image processing device 2203 is configured to perform the second image processing on the first image processing result, the first image data, or the third image processing result. For example, the second image processing device 2203 may include one or more units of the following: an image signal processor (image signal processor, ISP) 2203a, a central processing unit (central processing unit, CPU) 2203b, a neural network process unit (NPU) 2203c, and a digital signal processor (DSP) 2203d. The second image processing device 2203 may further include another image processing unit. This is not limited in this application. The second image processing device 2203 may perform at least one subsequent processing, such as 3A processing, image domain conversion, or image post-processing, on the first image data, the first image processing result, or the third image processing result.

It should be further understood that the SoC 220 may further include another component in addition to the second bidirectional interface 2201 and the second image processing device 2203, for example, one or more of a clock domain, a power supply, a RAM, and a ROM.

Optionally, the SoC 210 is connected to the memory 230. The SoC 210 may store, into the memory 230, the image data, such as the first image data or the first image processing result, received through the second bidirectional interface 2201. The SoC 210 may further read, from the memory 230, the first image data or the first image processing result stored in the memory 230, and then send the first image data or the first image processing result to the camera module 210 through the second bidirectional interface 2201.

Optionally, the SoC may further include a storage controller 2202. The storage controller 2202 is configured to: store the first image data or the first image processing result into the memory 230, and read the first image data or the first image processing result from the memory 230.

It should be understood that, for operations performed by the units or modules in the SoC, refer to the foregoing description of the system 200. Details are not described herein again.

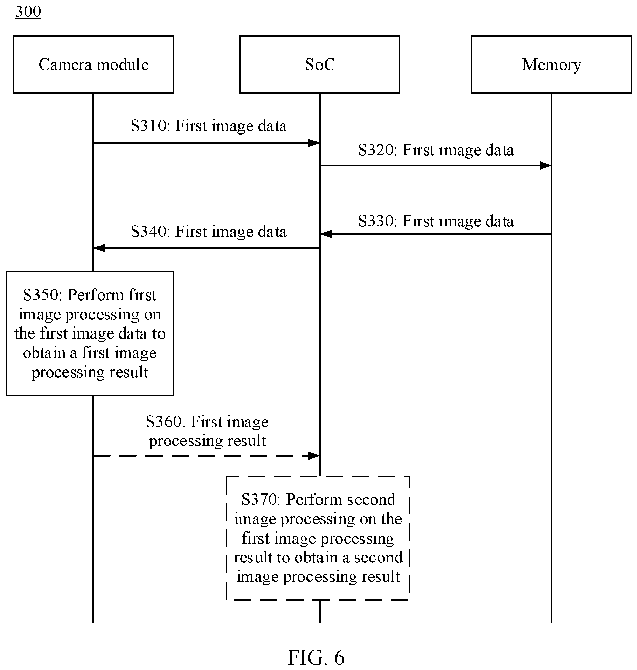

FIG. 6 is a schematic flowchart of an image processing method 300 according to this application. The method 300 may be applied to the foregoing system 200. To be specific, the camera module, the SoC, and the memory in the method 300 may respectively correspond to the camera module 210, the SoC 220, and the memory 230 in the system 200.

S310: The camera module obtains first image data, and sends the first image data to the SoC. Correspondingly, the SoC receives the first image data. S320: The SoC stores the first image data into the memory. S330: The SoC reads the first image data from the memory. When the camera module needs to use the first image data, the SoC may read the first image data from the memory. S340: The SoC sends the first image data to the camera module. Correspondingly, the camera module receives the first image data. S350: The camera module performs first image processing on the first image data to obtain a first image processing result.

Optionally, the method may further include: S360: The camera module sends the first image processing result to the SoC. S370: The SoC performs second image processing on the received first image processing result, to obtain a second image processing result. For specific details of the method 300, refer to the foregoing description of the system 200, and details are not described herein again.

According to the image processing method provided in this application, the camera module may access the memory by using the SoC, to resolve a problem that a large amount of data cannot be processed due to insufficient storage space of the camera module.

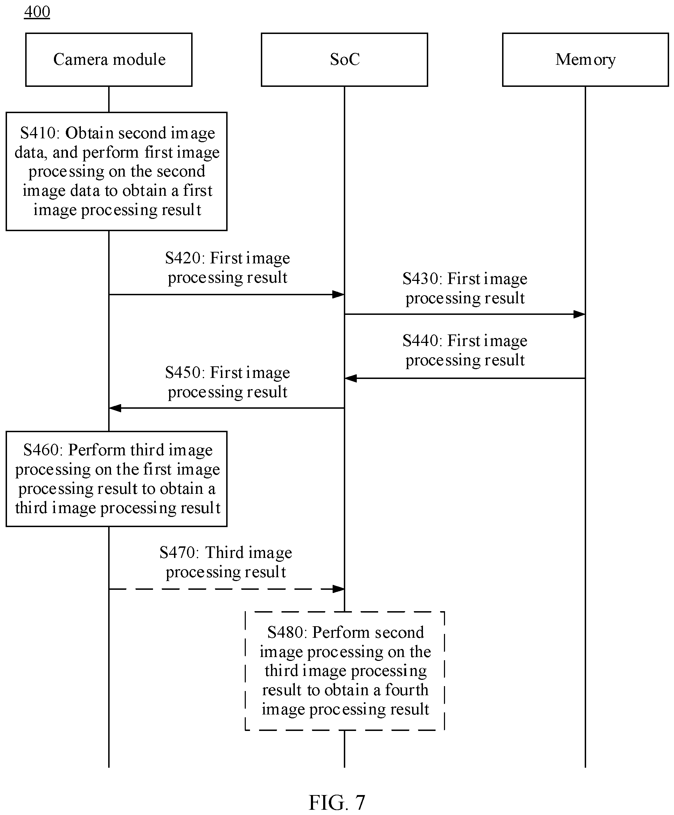

FIG. 7 is a schematic flowchart of another image processing method 400 according to this application. The method 400 may be applied to the foregoing system 200. To be specific, the camera module, the SoC, and the memory in the method 400 may respectively correspond to the camera module 210, the SoC 220, and the memory 230 in the system 200.

S410: The camera module obtains second image data, and performs first image processing on the second image data to obtain a first image processing result. It should be noted that step S410 in the method 400 is similar to step S350 in the method 300. S420: The camera module sends the first image processing result to the SoC. Correspondingly, the SoC receives the first image processing result. S430: The SoC stores the first image processing result into the memory. S440: The SoC reads the first image processing result from the memory. When the camera module needs to use the first image processing result, the SoC may read the first image processing result from the memory. S450: The SoC sends the first image processing result to the camera module. Correspondingly, the camera module receives the first image processing result. S460: The camera module performs third image processing on the first image processing result to obtain a third image processing result.

Optionally, the method may further include: S470: The camera module sends a third image processing result to the SoC. S480: The SoC performs second image processing on the received third image processing result, to obtain a fourth image processing result. For specific details of the method 400, refer to the foregoing description of the system 200, and details are not described herein again.

According to the image processing method provided in this application, the camera module may access the memory by using the SoC, to resolve a problem that a large amount of data cannot be processed due to insufficient storage space of the camera module.

It may be understood that, functions or algorithms implemented by any processing unit in the foregoing embodiments, such as the ISP, the CPU, the NPU, or the DSP may be entirely or partially implemented by using software, hardware, firmware, or any combination thereof. It may be understood that, firmware may be considered as an implementation of software. When software or firmware is used for implementation, any processing unit may run related software, and the software may be entirely or partially implemented in a form of a computer program product. The computer program product includes one or more computer instructions. When the computer program instructions are loaded and executed on the computer, the procedures or functions according to embodiments of this application are all or partially generated.

An embodiment of this application further provides a computer-readable storage medium. The computer-readable storage medium stores a computer program. When the computer program is run on a processing unit or a corresponding device, such as a SoC, a method procedure in this embodiment of this application is implemented. An embodiment of this application further provides a computer program product. When the computer program product is run on a processing unit or a corresponding device, a method procedure in this embodiment of this application is implemented. The computer program product may include a large quantity of code instructions, and is implemented by using a plurality of software units. This is not limited in this embodiment.

It may be understood that, the any processing unit may be selectively implemented by using at least some of hardware. For example, the ISP may include a large quantity of data logical operation circuits that process image signals in a logical gate operation manner if software does not need to be run, to implement corresponding functions or procedures mentioned in preceding embodiments.

It may be understood that, functions or algorithms in the method procedures in embodiments of this application are implemented in a manner of a combination of software and hardware. For example, when performing a logic gate operation, the ISP also executes necessary software to implement a corresponding function or algorithm.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic system, comprising a camera module and a system on chip SoC, wherein
the camera module comprises a first bidirectional interface;
the SoC comprises a second bidirectional interface, the second bidirectional interface is coupled to the first bidirectional interface, and the first bidirectional interface and the second bidirectional interface support a same bidirectional data communication interface protocol;
the camera module is configured to obtain image data, and perform first image processing on the image data to obtain a first image processing result; and
the SoC is configured to perform second image processing on the first image processing result to obtain a second image processing result.

2. The system according to claim 1, wherein the bidirectional data communication interface protocol comprises a serializer/deserializer SerDes interface protocol.

3. The system according to claim 1 or 2, wherein each of the first bidirectional interface and the second bidirectional interface comprises:
a transmit interface and a receive interface, or
a transceiver interface multiplexed for sending and receiving.

4. The system according to any one of claims 1 to 3, wherein the system further comprises a memory, and the memory is connected to the SoC;
the image data comprises first image data;
the camera module is further configured to: before performing the first image processing on the first image data, send the first image data to the SoC through the first bidirectional interface;
the SoC is further configured to: receive the first image data through the second bidirectional interface, store the first image data into the memory, read the first image data from the memory, and send the first image data to the camera module through the second bidirectional interface; and
the camera module is further configured to: receive the first image data through the first bidirectional interface, and perform the first image processing on the first image data.

5. The system according to claim 4, wherein the memory comprises a double rate synchronous dynamic random-access memory DDR RAM.

6. The system according to claim 4 or 5, wherein the SoC comprises a storage controller, configured to store the first image data in the memory, and read the first image data from the memory.

7. A camera module, comprising:
a first image processing device, configured to obtain image data, and perform first image processing on the image data to obtain a first image processing result; and
a first bidirectional interface, coupled to a second bidirectional interface of a system on chip SoC, wherein the first bidirectional interface and the second bidirectional interface support a same bidirectional data communication interface protocol, and the first bidirectional interface is configured to send the first image processing result to the SoC.

8. The camera module according to claim 7, wherein the bidirectional data communication interface protocol comprises a serializer/deserializer SerDes interface protocol.

9. The camera module according to claim 7 or 8, wherein the first bidirectional interface comprises:
a transmit interface and a receive interface, or
a transceiver interface multiplexed for sending and receiving.

10. The camera module according to any one of claims 7 to 9, wherein the image data comprises first image data;
the first bidirectional interface is further configured to: send the first image data to the SoC, wherein the first image data is further stored by the SoC into a memory connected to the SoC; and receive, from the SoC, the first image data stored in the memory; and
the first image processing device is configured to perform the first image processing on the first image data.

11. The camera module according to claim 10, wherein the memory comprises a double rate random-access memory DDR RAM.

12. A system on chip SoC, comprising:
a second bidirectional interface, coupled to a first bidirectional interface of a camera module, wherein the first bidirectional interface and the second bidirectional interface support a same bidirectional data communication interface protocol, the second bidirectional interface is configured to obtain a first image processing result from the camera module, and the first image processing result is obtained by the camera module by performing first image processing on image data; and
a second image processing device, configured to perform second image processing on the first image processing result to obtain a second image processing result.

13. The SoC according to claim 12, wherein the bidirectional data communication interface protocol comprises a serializer/deserializer SerDes interface protocol.

14. The SoC according to claim 12 or 13, wherein the second bidirectional interface comprises:
a transmit interface and a receive interface, or
a transceiver interface multiplexed for sending and receiving.

15. The SoC according to any one of claims 12 to 14, wherein the SoC is connected to a memory, the image data comprises first image data, and the second bidirectional interface is further configured to obtain the first image data from the camera module;
the SoC further comprises a storage controller, configured to store the first image data into the memory, and read the first image data from the memory; and
the second bidirectional interface is further configured to send the first image data to the camera module, wherein the camera module performs the first image processing on the first image data.

16. The SoC according to claim 15, wherein the memory comprises a double rate random-access memory DDR RAM.
